# EUROPÄISCHE PATENTSCHRIFT

(11) **EP 0 351 727 B1**
(45) Veröffentlichungstag und Bekanntmachung des Hinweises auf die Patenterteilung: **18.05.1994**
(21) Anmeldenummer: 89112930.6
(22) Anmeldetag: 14.07.1989
(51) Int. Cl.: G11B 25/06, G11B 15/68, G11B 15/32, G11B 15/17

(54) **Kassettenmagazin**
Cassette holder
Magasin pour cassette

(30) Priorität: 20.07.1988 DE 3824525
(43) Veröffentlichungstag der Anmeldung: 24.01.1990
(73) Patentinhaber: Dangschat, Rainer, Dipl.-Ing. (FH), D-85652 Pliening (DE)
(72) Erfinder: Dangschat, Rainer, Dipl.-Ing. (FH), D-85652 Pliening (DE)
(74) Vertreter: Gornott, Dietmar, Dipl.-Ing.

(56) Entgegenhaltungen:
- FR-A- 2 313 735
- US-A- 3 809 287

## Beschreibung

Die Erfindung bezieht sich auf ein Magazin zur Aufbewahrung einer oder mehrerer Kassetten, wie Video-, Ton- und Datenkassetten, mit einer Auf- und einer hierzu achsparallelen Abwickelspule für bandförmige Aufzeichnungsträger, wobei die Kassetten zum Eingreifen von Antriebsspindeln einer Antriebseinrichtung für die Ab- und Aufwickelspulen ausgebildet sind.

Kassettenmagazine sind in den verschiedensten Bauformen und Anordnungen in Verbindung mit automatischen Abspielgeräten mit Kassettenwechsler bekannt. Bei einem Kleinkassettenwechsler gemäß der DE-OS 31 13 900 münden auf einer eingebauten Drehbühne vier als Führungen ausgebildete Kassettenhalterungen in einen zentralen Raum, in dessen Bereich wesentliche Teile eines Autoreverse-Laufwerks untergebracht sind. Wahlweise wird eine horizontal eingesetzte Kassette, die ab-, zurück- oder umgespult werden soll, durch Drehung der Drehbühne in Wirkverbindung mit dem Autoreverse-Laufwerk gebracht. Dieses greift dann mit den Antriebsspindeln in die Mitnahmebohrungen der Spulen ein. Ebenso werden die Magnetköpfe und die Antriebsorgane in den Bereich der in Funktionsstellung geschwenkten Kassette gebracht.

Bei anderen automatischen Kassettenwechslern für Ton- oder Videoaufzeichnungsgeräte sind Stapelmagazine in senkrechter (DE-OS 37 15 400) oder in horizontaler Lage angeordnet (DE-OS 25 11 509).

Die Magazine können aber auch so ausgebildet sein, daß die flächenhaften Kassetten senkrecht übereinander stapelbar sind, so daß nicht ihre Schmalseiten nebeneinanderliegen, sondern ihre großflächigen Breitseiten aneinanderstoßen. Ein solches Magazin ist z.B. aus der DE-OS 31 10 394 und als Spender für zu verleihende Kassetten aus US-A-3,809,287 bekannt.

Bei den bekannten Kassettenwechselgeräten wird entweder die Kassette aus dem Magazin entnommen oder in einer bestimmten Position in Wirkverbindung mit einem Kassettenlaufwerk gebracht, über das einerseits das bandförmige Aufzeichnungsmaterial mit den Ton-, Video- oder Datensignalen bespielt wird oder von welchem die Signale abgegriffen werden. Für den schnellen Vor- oder Rücklauf wird der gleiche Antrieb verwendet, wobei durch entsprechende Drehzahlsteuerung oder durch Einschalten von Schnellaufgetrieben ein schneller Vor- oder Rücklauf bewerkstelligt wird.

Während Audiokassetten herkömmlicher Art in der Regel beidseitig bespielbar sind (Wendekassette) und somit am Ende der einen Seite durch Drehung der Kassette und Wiedereinführen in das Kassettenlaufwerk ein Abspiel- oder Aufnahmevorgang von der zweiten bzw. auf die zweite Spur ermöglicht wird, ist es bei Videokassetten und auch bei digitalen Tonkassetten und Datenkassetten nur möglich, aufgezeichnete Signale wieder abzutasten, wenn das abgespielte Band zurückgespult wird und eine erneute Wiedergabe bzw. Aufnahme erfolgt. Um ein Wenden von herkömmlichen Audiokassetten zu vermeiden und damit einen Endlosbetrieb zu ermöglichen, werden die oben genannten Autoreverse-Bandantriebssysteme mit zwei Kopfpaaren für den Vor- und Rücklauf üblicherweise eingesetzt. Derartige Laufwerke weisen jedoch den Nachteil auf, daß Abspiel- und ggf. Aufnahmeköpfe paarweise angeordnet sein müssen oder diese durch entsprechende mechanische Antriebe am Ende eines Bandes auf die andere Spur umgeschaltet werden müssen, noch bevor das das Band in die andere Richtung bewegt wird.

Die meisten bekannten Kassettengeräte gestatten jedoch nur das Abspielen und Aufzeichnen auf eine Spur. Bei Videokassetten ist dies, wie dargelegt, ohnehin der Fall, so daß während der Rückspulzeit einer Kassette das Gerät für andere Betriebszustände blockiert ist. Ein Autoreverse-Antrieb für Videogeräte, bei denen die Informationen im Schrägspurverfahren auf das Magnetband aufgezeichnet werden, ist nicht möglich. Dies trifft auch für Kassetten für das digitale Tonaufzeichnungssystem DAT (Digital Audio Tape) zu, nach welchem in digitaler Form auf dem Bandträger Tonsignale aufgezeichnet sind. Die Rückspulzeit der Bänder beträgt je nach deren Länge und maximaler Umspulgeschwindigkeit ca. 40 Sek. bis zu über 3 Min.

Ausgehend von dem beschriebenen Stand der Technik liegt der Erfindung die Aufgabe zugrunde, ein Magazin zur Aufbewahrung von Kassetten so weiterzubilden, daß unabhängig von einem Kassettenlaufwerk für Video-, Ton- oder Datenkassetten zur Aufnahme und/oder Wiedergabe der entsprechenden Signale bei beliebigem Wiedergabe- oder Aufnahmestand ein Rückspulen in eine Ausgangsposition oder bei doppelseitig bespielbaren Bändern ein Umspulen in gewünschter Spulrichtung ermöglicht wird.

Die Aufgabe wird nach der Erfindung durch Verwendung eines Magazins für eine oder mehrere Kassetten mit den im Kennzeichen des Anspruchs 1 angegebenen technischen Merkmalen gelöst, wonach gesonderte Antriebsmittel allein für den Rückspulvorgang oder bei entsprechender Ausgestaltung für den Umspulvorgang einer einschiebbaren Kassette vorgesehen sind.

Ein solches Magazin ist mit herkömmlichen Magnetbandgeräten kombinierbar und kann daneben, darüber oder darunter bei entsprechender Anordnung plaziert sein.

Vorteilhafte Weiterbildungen der Erfindung sind in den Unteransprüchen detailliert angegeben. Je nach Bauart der Kassette sind u.U. Entriegelungsvorrichtungen vorzusehen oder mit der Antriebseinrichtung zu koppeln, die eine Entriegelung des Bandantriebs der Kassette vor dem Umspul- oder Rückspulvorgang bewirken. Diese Entriegelungsvorrichtungen können mit der Hubeinrichtung der Spindel oder der Schiebeeinrichtung für den Auswerfer der Kassette, falls ein solcher vorhanden ist, gekoppelt sein.

Im Anspruch 1 ist die ganz allgemein anzuwendende Lehre enthalten, wonach in einem Magazin völlig unabhängig von einem Bandgerät zur Aufnahme oder Wiedergabe die erforderlichen Antriebsmittel vorgesehen sind, um das Rückspulen oder Umspulen einer einem Abspielgerät entnommenen und in das Magazin eingeführten Kassette zu ermöglichen. Dabei kann die Kassette entweder bei entsprechender Ausbildung des Lagerfachs bzw. der Lagerkammer auf die Mitnahmespindel oder auf zwei Spindeln, falls solche vorhanden sind, aufgesetzt werden. Bei anderen Ausführungen ist es auch möglich, mittels einer Hubeinrichtung die Spindel mit dem Antriebsmotor oder unabhängig hiervon bei entsprechender konstruktiver Ausführung in die Kassette zu verschieben. Die Antriebsspindel greift dabei in eine Mitnahmemittenbohrung der Ab- oder Aufwickelspule ein und überträgt je nach Spulrichtung die Drehbewegung des Motors auf den entsprechenden Wickelkörper, der drehbar in der Kassette gelagert ist.

Es hat sich gezeigt, daß in einfacher Weise eine solche Vorrichtung mit einem Stapelmagazin gekoppelt werden kann, wobei nach Abschalten des Rück- oder Umspulvorgangs die Kassette mittels einer Verschiebevorrichtung aus der Lagerkammer herausgedrückt und in ein anschließendes Aufnahmefach hineingeschoben wird, das zweckmäßigerweise für eine Vielzahl von Kassetten (10 oder 20) ausgelegt ist. Die hierfür erforderlichen Maßnahmen je nach Ausgestaltungsart des Magazins sind in den Ansprüchen 2 bis 6 angegeben.

An die konstruktive Ausführung des Antriebs sind keine speziellen Forderungen gestellt. Es kann entweder der Antriebsmotor mitsamt den übertragenden Kupplungsgliedern und einer eventuell vorhandenen Verschiebeeinrichtung auf einer Platine gelagert sein, die im Falle, daß die Spindeln in die Kassette eingeführt werden müssen, verschiebbar angeordnet ist und entweder mittels eines von Hand betätigbaren zugänglichen Hebels am Gehäuse verschoben wird oder aber mittels eines motorischen Antriebs oder Hubmagneten. Für eine logische Ablaufsteuerungsfolge ist im Anspruch 6 eine Ablaufsteuerung angegeben, die bei der Auslegung eines Magazins nach der Erfindung beachtet werden sollte, um ein Um- oder Rückspulen sicherzustellen.

Es gibt verschiedene Kassettenformen, die, wie bereits angegegeben, Sperrmechanismen aufweisen, die verhindern, daß bei entnommener Kassette das Band sich von den Spulen ungewollt abspulen kann. Selbstverständlich müssen in Analogie zu den Aufnahme- und Entriegelungsvorrichtungen in einem normalen Auf- oder Abspielgerät entsprechende Schiebeeinsätze vorgesehen sein, die eine Schutzklappe u.U. öffnen und in Wirkverbindung mit den Sperrgliedern treten, damit die Sperrung aufgehoben wird. Dies kann z.B. bei einer DAT-Kassette durch eine in die Bodeplatte eingreifende Hebelanordnung erfolgen, die die Bodenplatte verschiebt und den Sperrmechanismus entriegelt.

Nach einer weiteren vorteilhaften Ausgestaltung der Erfindung ist bei einem solchen Gerät, das sowohl ein Rück- als auch Umspulen ermöglicht, vorgesehen, daß entsprechende Betätigungstasten für die Definition der Spulrichtung in der Gehäusefront vorgesehen sind. Diese sind zweckmäßigerweise in unmittelbarer Nähe der Lagerkammer der Kassette für das Umspulen und an dem jeweiligen Ende der Kassette angebracht. Diese Ausführungsform ist von besonderer Bedeutung in Verbindung mit Wendekassetten, die von beiden Seiten vertauscht eingeführt werden können, wobei der Wunsch besteht, entweder die Seite A oder die Seite B nach einer erfolgten Wiedergabe erneut abzuspielen. Bei Kassetten, für deren Bespielung die gesamte mechanische Bandbreite benötigt wird, d.h. die nach dem Abspielen zum Zwecke der Wiederholung zurückgespult werden müssen, reicht es völlig aus, wenn das Magazin nur mit einer Rückspulvorrichtung ausgestattet ist, da ohnehin solche Kassetten nur in einer Richtung in das Magazin einsetzbar sind.

Die Erfindung wird nachfolgend anhand der in den Zeichnungen schematisch dargestellten Ausführungsbeispiele näher erläutert.

In den Zeichnungen zeigen:
- Fig. 1: eine Draufsicht auf ein Stapelmagazin mit senkrecht eingesetzten Kassetten im Teilschnitt zur Sichtbarmachung der ebenfalls nur schematisch eingezeichneten Antriebsmittel,
- Fig. 2, 3 und 4: schematisch dargestellte Einrichtungen, die in Verbindung mit einer DAT-Kassette benötigt werden.

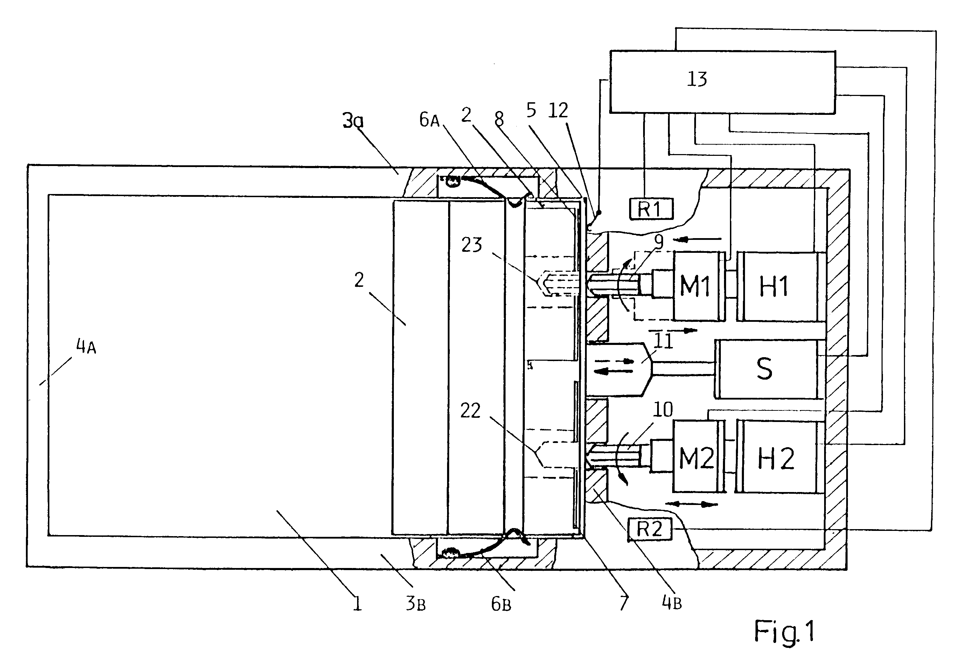

In Fig. 1 ist ein Stapelmagazin schematisch dargestellt, das aus einem Aufnahmefach 1 zur Aufnahme einer Vielzahl von Kassetten 2 (10) dient. Die Breite des Aufnahmefachs 1 entspricht dabei der Länge der Kassette. Die Seitenwände sind zweckmäßigerweise mit einem Filzbelag ausgeschlagen, so daß ein leichteres Verschieben der Kassetten in dem Aufnahmefach 1 möglich ist. Begrenzt wird das Aufnahmefach durch Seitenwandungen 3a und 3b sowie eine hintere Stirnwand 4a und eine vordere Stirnwand 4b, die das Aufnahmefach und das sich anschließende Lagerfach 5 von jenem Gehäuse trennt, in dem der Antriebsmechanismus zum Um- oder Rückspulen des Magnetbandes in der Kassette untergebracht ist. Das Lagerfach 5 wird gebildet einerseits durch die Stirnwand 4b des Gehäuses und andererseits durch Teile der Seitenwandungen 3a und 3b und zweier verschwenkbar in diesen angeordneten Federn 6a und 6b, die gegenläufig in die zugeordnete Seitenwandung 3a und 3b hineingedrückt werden, wenn die eingesetzte Kassette 2 aus dem Lagerfach 5 in das Aufnahmefach 1 durch seitlich angreifende Kräfte hineingeschoben wird. Die Tiefe des Aufnahmefachs und des Lagerfachs sollte geringer sein als die Höhe der eingesetzten Kassette, damit diese von Hand leicht wieder entnommen werden kann. Anderenfalls sind Mechanismen zum Auswurf der Kassette vorzusehen, die in verschiedensten Bauausführungen bekannt sind.

In der Kassette 2 sind die Abwickelspule 7 und die Aufwickelspule 8 dünn eingezeichnet. Es sei angenommen, daß das Band infolge des Abspielens in einem Abspielgerät auf die Aufwickelspule 8 aufgewickelt ist. Die Abwickelspule 7 ist mithin leer. Für die Wiederholung der Abspielung ist es erforderlich, daß ein Rückspulen erfolgt, zu welchem Zweck dieses Magazin mit den Antriebsmitteln nach der Erfindung vorgesehen ist. In dem Lagerfach für den Antrieb ist ein erster Motor M1 als Umspulmotor vorgesehen, der mit einer Hubeinrichtung H1 gekoppelt und horizontal verschiebbar ist. Der Motor M1 ist seinerseits mit einer Spindel 9 gekoppelt, die bei Betätigung der Hubeinrichtung H1 gemeinsam mit dem Motor M1 so weit nach links in die Kassette 2 hineingeschoben wird, daß eine Übertragung der Drehbewegung des Motors M1 über die Aufnahmeantriebsbohrung der Aufwickelspule 8 erfolgt.

Weiterhin ist ein zweiter Motor M2 vorgesehen, der mit einer Hubeinrichtung H2 gekoppelt ist. Bei Betätigung derselben wird der Motor M2 gemeinsam mit der mit ihm gekoppelten Spindel 10 in Richtung der Kassette verschoben, wobei die Spindel 10 ebenfalls in der beschriebenen Art und Weise in die Mitnahmebohrung 22 der Abwickelspule 7 eingreift und die Drehbewegung des Motors M2 überträgt. Selbstverständlich kann nur ein einziger solcher Antrieb vorgesehen sein. Hierfür ist entweder die Antriebsgruppe M1, H1 oder die Antriebsgruppe M2, H2 vorzusehen, wenn das Umspulen bzw. Rückspulen einer Kassette immer nur in einer Richtung erfolgen soll. Die Verschiebeposition ist strichpunktiert bezüglich der Antriebsgruppe M1, H1 eingezeichnet. Weiterhin befindet sich in diesem Gehäuseteil eine Schiebeeinrichtung S, die auf einen Schieber 11 wirkt, der nach Beendigung des Rück- oder Umspulvorgangs durch Betätigung der Schiebeeinrichtung S ebenfalls in Richtung der Kassette 2 horizontal verschoben wird und dabei gegen die Kassette 2 drückt. Diese drückt mit ihrer linken oberen und unteren Kante gegen die das Lagerfach begrenzenden Federn 6a und 6b, die in die Seitenwandungen verschwenken und die Kassetten in Schieberichtung freigeben.

Der Hub des Schiebekolbens ist dabei so groß, daß die Kassette in das Aufnahmefach hineingedrückt wird, wobei die anschließenden Kassetten 2 um ein Kassetten-Rastermaß verschoben werden.

Weiterhin ist ein Bandabschalter bekannter Bauart, z.B. mit einem Sensor, vorgesehen, der das Bandende erkennt, z.B. durch Signalabtastung, oder durch ein durch einen Aluminiumstreifen verändertes elektrisches Feld wirksam wird. Dieser Bandendabschalter ist in der Ausführung nur angedeutet und mit dem Bezugszeichen 12 versehen. Jede beliebige Ausgestaltungsform ist dabei möglich. Weiterhin ist ein Tastschalter R1 vorgesehen, der zur Bestimmung der Umspulrichtung nach oben dient und der dem Motor M1 funktional zugeordnet ist. Der Tastschalter R2 hingegen ist funktional dem Motor M2 zugeordnet, so daß bei dessen Betätigung das Umspulen nach unten hin erfolgt, und zwar in der dargestellten entgegengesetzten Drehrichtung zum Motor M2 über der Spindel.

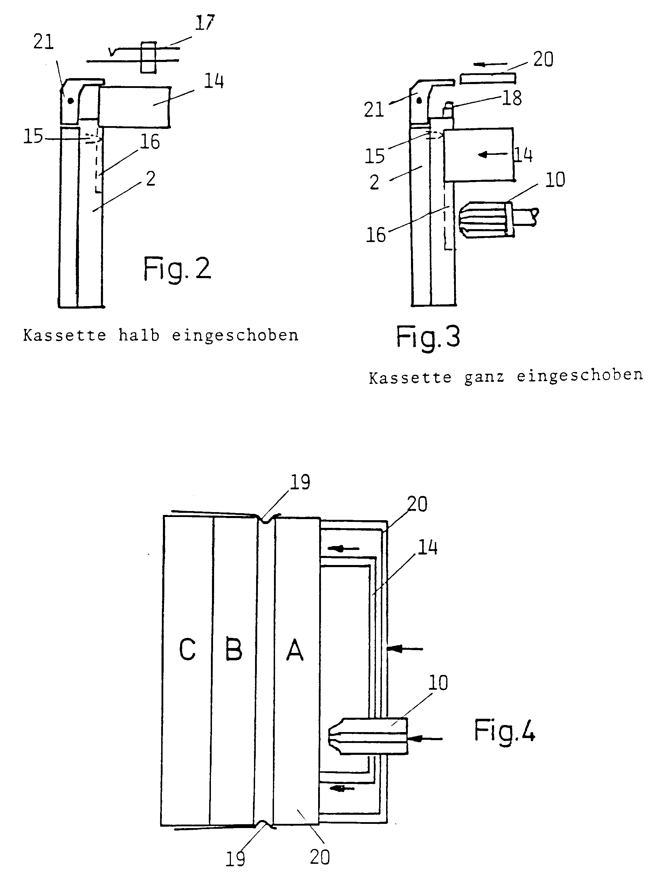

Es sei angenommen, daß die Hub- und Schiebeeinrichtungen H₁, H₂, S aus Elektrohubmagneten bestehen, die elektrisch unmittelbar ansteuerbar sind und deren Hubanker durch nicht dargestellte Rückstellfedern in seine Ausgangsschaltung zurückgeschoben wird. Ein Schalter, über den die Funktionssteuerabläufe ausgelöst werden, ist in dem Lagerfach 5 integriert und wird durch die eingeschobene Kassette betätigt. Der Schalter 17 (Fig. 2) ist in dieser Ausführung (Fig. 1) nicht sichtbar. Selbstverständlich kann auch anstelle eines solchen von der Kassette betätigten Schalters beim Einführen derselben in die Lagerkammer 5 ein Tastschalter an der Gehäuseoberfläche vorhanden sein oder dieser Schalter funktional mit dem Bandrichtungsschalter der Tasten R1 oder R2 gekoppelt sein, so daß nach dem Einschieben der Kassette und bei Betätigung des Tastschalters der Funktionsablauf für das Umspulen automatisch erfolgt. Üblich ist es jedoch, entsprechend bekannten Videoaufzeichnungs- und -wiedergabegeräten und Tonaufzeichungs- und - wiedergabegeräten einen Schalter 18 in dem Aufnahmefach vorzusehen, der mit Erreichen der Kassette 2 in ihrer Endstellung in der Lagerkammer 5 betätigt wird und ein entsprechendes Steuersignal abgibt.

Die Ablaufsteuerung selbst erfolgt mittels einer logischen Verknüpfungsschaltung in der zentralen Steuereinheit 13, die mit den angesprochenen elektrisch steuerbaren Elementen des Antriebs verbunden ist. Die Schaltung kann mittels logischer Gatter, wie UND oder NAND und OR-Schaltungen, realisiert sein und bewirkt eine Funktionsablaufsteuerung nach dem Signalisieren, daß eine um- oder rückzuspulende Kassette in die Lagerkammer 5 eingeschoben ist. Soll nun das Umspulen oder Rückspulen auf den Abwickelteller 7 erfolgen, so ist es bei dieser Ausführung erforderlich, daß die Bandrichtung durch Betätigen der Taste R2 vorgegeben wird. Hat die Kassette 2 die Endstellung in der Lagerkammer 5 erreicht, so steuert der nicht dargestellte Schalter die Steuereinheit 13 und leitet die Funktionsabläufe ein. Von der Steuerschaltung 13 wird zunächst der Hubmagnet H2 betätigt, wodurch der Motor M2 nach links vorgeschoben wird, so daß die Spindel 10 in die Mitnahmebohrung 23 des Wickeltellers 7 eingreift. Ist die Endstellung der Spindel erreicht, so bewirkt die elektronische Steuerung 13, daß der Motor M2 an die Antriebsstromquelle angeschaltet wird, so daß die Spindel 10 sich in der dargestellten Richtung dreht und ein Um- oder Rückspulen erfolgt. Der Endabschalter 12 signalisiert das Ende des Rückspulvorgangs und bewirkt eine gegenläufige Steuerung über die Steuereinrichtung 13. Der Motor M1 wird gestoppt und die Hubeinrichtung bringt den Motor mitsamt der gekuppelten Spindel 10 in die dargestellte Ruhelage zurück. Dies kann z.B. durch eine auf den Hubanker wirkende Rückstellfeder bewirkt werden. Hernach bewirkt die elektronische Steuerung 13, daß die Schiebeeinrichtung S angesteuert wird, so daß der Schieber 11 in die dargestellte Pfeilrichtung (ausgezogener Pfeil) um mindestens die Breite der Lagerkammer 5 in Richtung des Aufnahmefachs 1 verschoben wird. Dabei drückt der Schieber 11 gegen die Seitenwand der Kassette und bewirkt, daß diese mit ihren linken oberen und unteren Kanten gegen die die Lagerkammer 5 begrenzenden Federn drückt, die in die Seitenwandungen 3a und 3b hineingeschwenkt werden. Beim weiteren Verschieben wird die Kassette 2 in das Aufnahmefach 1 hineingeschoben. Nach Beendigung gleiten die Federn 6a und 6b in die dargestellte Position zurück und hintergreifen mit der hinteren Gleitfläche die so verschobene Kassette 2. In die Lagerkammer 5 kann nun eine weitere Kassette 2 eingeführt werden.

Bei Verwendung von Wendekassetten ist es zweckmäßig, eine zweite Antriebsvorrichtung ebenfalls vorzusehen (M1, H1 und R1), um wahlweise entweder in der einen Richtung oder in der anderen Richtung ein Umspulen, das auch das Rückspulen sein kann, zu bewirken. Wird deshalb die Taste R1 gedrückt, so wird die Rückspulrichtung aufgehoben und es erfolgt ein Umspulen auf den Aufwickelteller 8. Die Funktionsabläufe sind identisch mit den beschriebenen, unter der Maßgabe, daß nunmehr die Hubeinrichtung H1 und der Motor M1 angesteuert werden. Alle übrigen Wirkungsweisen bleiben erhalten.

Anstelle der hier vorgesehenen Hubmagneten kann auch ein mechanischer Antrieb verwendet werden, wobei durch entsprechende mechanische Kopplungsglieder auch die Hubbewegung durch ein und denselben Antriebsmotor bewirkt werden kann, wobei über Kupplungen die Spindel nach erfolgtem Rück- oder Umspulen abgekuppelt wird, um den Antriebsmotor von der Spule zu trennen. Selbstverständlich kann der eine oder andere Motor auch als Bremsmotor dienen, wenn der andere Motor angetrieben wird, so daß eine gesonderte Bremse für einen gleichförmigen Umspulvorgang auf den jeweiligen Abspulteller nicht zu wirken braucht.

Das beschriebene Magazin kann z.B. in einem Auto eingebaut und für eine Vielzahl von Kassetten ausgelegt sein. Die lästige Wartezeit für den Umspulvorgang einer Kassette entfällt. Dies ist besonders wichtig, wenn es sich um VHS-, VHS-C-, Beta-, Video 8- und andere Kassetten sowie um DAT-Kassetten für die digitale Tonaufzeichnung handelt, die für die erneute Abspielung stets an den Bandanfang oder eine bestimmte Position zurückgespult werden müssen. Es ist deshalb auch möglich, die beschriebenen Funktionsabläufe mit Bandstellenanzeigen und Bandstellenstoppeinrichtungen zu koppeln, z.B. um auf die Stelle zurückzuspulen, an der ein Spielfilm beginnt, der z.B. durch ein Markierungssignal auf dem Band gekennzeichnet ist. Eine gesonderte Abtasteinrichtung, die aus den normalen Geräten für Aufnahme und Wiedergabe bekannt ist, tastet dabei das Band ab und sucht nach dem entsprechenden Stellensignal und erzeugt bei Übereinstimmung mit der Vorgabe eine künstliche Bandabschaltung. Der Rückspulvorgang wird dabei an der entsprechenden Position beendet. Selbstverständlich können auch Bandlängenzähler die gleiche Funktion bewirken.

Wird ein solches Magazin nach Fig. 1 für die Aufnahme von Kassetten für die digitale Tonaufzeichnung verwendet, so sind die aus den Fig. 2, 3 und 4 schematisch ersichtlichen Einrichtungen mit dem Bandantrieb zu koppeln. Beim Einschieben der Kassette 2 entriegeln zwei Bügelschieber 14 und 20 die beiden Sperren 15 und schieben die Bodenplatte 16 zurück. Ist die Kassette voll eingeschoben, so wird der Schalter 17 betätigt, der mit der Steuereinrichtung 13 in Fig. 1 verbunden ist. Der Rückspulmitnehmer der Spindel 10 wird danach in Pfeilrichtung (Fig. 3 und 4) bewegt. Danach erfolgt ein automatisches Rückspulen. Anschließend wird über einen Motor der Bügel 14 etwa 10 mm in Pfeilrichtung bewegt (Rastermaß der Lagerungskammer) und die Kassette 2 von der Rückspulposition A (Fig. 4) in die erste Warteposition B transportiert. Dazu muß der Widerstand der gefederten prismenförmigen Führung 19, die durch eine vergleichbare Feder 6a oder 6b gebildet ist, überwunden werden. Da beim Transport durch den Bügel 14 die beiden Bodensperren 15 niedergedrückt sind, schließt sich die Bodenplatte automatisch durch die auf sie wirkende Feder in der Kassette, sobald der Bügel 14 wieder in die Ruheposition zurückgezogen wird. Auch der weiterhin vorgesehene Bügel 20 zum Öffnen der Bandschutzklappe 21 und die Spindel 10 werden zurückgezogen, so daß in die Lagerkammer 5 eine weitere DAT-Kassette einlegbar ist.

## Patentansprüche

1. Magazin zur Aufbewahrung einer oder mehrerer Kassetten, wie Video-, Ton- und Datenkassetten, mit einer Auf- und einer hierzu achsparallelen Abwickelspule für bandförmige Aufzeichnungsträger, wobei die Kassetten zum Eingreifen von Antriebsspindeln einer Antriebseinrichtung für die Ab- und Aufwickelspulen ausgebildet sind, dadurch gekennzeichnet,
- daß in dem Magazin eine Antriebseinrichtung (M₁, M₂) zum Um- oder Rückspulen des bandförmigen Aufzeichnungsträgers von der Abwickelspule auf die Aufwickelspule oder umgekehrt vorgesehen ist,
- daß die Kassette (2) beim Einsetzen in das Magazin (5) entweder auf eine oder zwei Antriebsspindeln (9, 10) aufgreift oder letztere manuell oder motorisch angetrieben in die eingesetzte Kassette (2) schiebbar angeordnet sind, wobei die bei Wiedergabebetrieb als Abwickelspule (7) dienende Spule oder beide Spulen an die Antriebseinrichtung (M₁, M₂) angekuppelt werden,
- daß ein Ein/Ausschalter (2, 17) vorgesehen ist, der manuell oder durch die eingesetzte Kassette (2) mittelbar beim Einsetzen in die Endposition betätigt wird und den Antriebsmotor (M₁, M₂) der Antriebseinrichtung an eine Stromversorgung anschaltet,
- daß ein an sich bekannter Bandabschalter vorgesehen ist, der nach dem Rück- oder Umspulen des bandförmigen Aufzeichnungsträgers mit Erreichen von dessen Ende die Stromversorgung des Antriebsmotors (M₁, M₂) unterbricht, und daß die Antriebsspindel (9, 10) nach dem Rück- oder Umspulen aus der Kassette (2) automatisch zurückgezogen wird, oder daß die Kassette (2) von den Antriebsspindeln (9, 10) abgezogen wird.

2. Magazin nach Anspruch 1, dadurch gekennzeichnet, daß es aus einem rechteckförmigen Aufnahmefach (1) besteht, in dem mehrere Kassetten (2) gestapelt hintereinandergereiht verschiebbar eingesetzt und aus diesem entnehmbar sind, in welchem Aufnahmefach (1) durch niederdrückbare Arretierungsfedern (6a, 6b) im Bereich einer der beiden Seitenwandungen (3a, 3b) eine Lagerkammer (5) von dem übrigen Aufnahmefach abgetrennt ist, in das die rück- oder umzuspulende Kassette (2) einschiebbar ist und in die Antriebsspindel verschiebbar eingreift, und daß eine Verschiebeeinrichtung (S, 11) seitlich in Richtung des Aufnahmefaches (1) wirkend in oder neben der Lagerkammer (5) vorgesehen ist, die nach dem Rück- oder Umspulen seitlich gegen die Kassette (2) drückt, die mit ihren gegenüberliegenden Seitenkanten die Arretierungsfedern (6a, 6b) niederdrückt und aus der Lagerkammer (5) in das Aufnahmefach (1) gleitet, wobei die sich anschließenden, bereits vorhandenen Kassetten (2) um ein Rastermaß entsprechend der Breite der Kassetten (2) verschoben werden, und daß die Verschiebeeinrichtung (S, 11) entweder manuell über einen im Gehäuse angelenkten von außen bedienbaren Hebel oder mittels eines eigenen oder mit der Antriebsvorrichtung gekoppelten Antriebs automatisch vor- und zurückgesetzt wird, wobei erst dann die Kassette (2) in das Aufnahmefach (1) geschoben wird, wenn der Umspulvorgang beendet und der Bandabschalter betätigt ist.

3. Magazin nach Anspruch 2, dadurch gekennzeichnet, daß in den Innenraum des Aufnahmefaches eingreifende, mit der Verschiebeeinrichtung gekoppelte, die Lagerkammer begrenzende, ein- und ausschiebbare Vorsprünge vorgesehen sind, die vor der Schubbewegung der Verschiebeeinrichtung in die Seitenwände eingezogen werden.

4. Magazin nach Anspruch 1 oder 2, dadurch gekennzeichnet, daß die Rück- oder Umspuleinrichtung mindestens eine Antriebsspindel aufweist, die drehbar auf einer Hubeinrichtung angebracht ist, und daß nach dem Einsetzen der Spule die Hubeinrichtung manuell oder nach dem Schließen des Schaltkontaktes des Ein-/Ausschalters für den Antriebsmotor von diesem über Kopplungsglieder oder über einen separaten Antrieb in die Antriebsaufnahmeöffnung der Spule bzw. der Kassette geschoben wird, bevor die Antriebseinrichtung für für die Rück- oder Umspulung an den Motor angekuppelt ist.

5. Magazin nach einem der vorhergehenden Ansprüche, dadurch gekennzeichnet, daß zur Definition der Spulrichtung an dem Gehäuse der Richtung zugeordnete Funktionstasten sind oder ein Umschalthebel ist, bei dessen Betätigung der Ein-/Ausschalter des entsprechenden Motors oder ein Umlenkgetriebe derart gesteuert werden, daß die Bandlaufrichtung der gewünschten Spulrichtung folgt.

6. Magazin nach einem der vorhergehenden Ansprüche 2 bis 5, dadurch gekennzeichnet, daß eine Ablaufsteuerschaltung (13) die folgende Abläufe in logischer Folge nach Betätigen des Ein-/Ausschalters steuert:
a) Anschalten des Antriebs - falls vorhanden - für die motorisch angetriebene Hubeinrichtung für die Antriebsspindel,
b) Steuerung des Antriebssystems, unter Beachtung der gewünschten Spuleinrichtung,
c) Abschalten des Antriebs mit Erreichen des Bandes auf der einen oder anderen Spule, entsprechend der wahlweisen festgelegten Spulrichtung,
d) Rückführung der Hubeinrichtung der verschiebbaren Antriebsspindel in die Ausgangsposition,
e) Einschalten der Verschiebeeinrichtung zum Herausdrücken der Kassette aus der Lagerkammer und Rückführung derselben in die Ausgangsposition nach erfolgter Hubbewegung.

7. Magazin nach einem der vorhergehenden Ansprüche, dadurch gekennzeichnet, daß die Hub- oder Verschiebeeinrichtung vor dem Um- oder Rückspulen an eine Entriegelungsvorrichtung (15, 18) ankoppelbar ist, über die sich ein eventuell in der Kassette vorhandener Verriegelungshebel und/oder eine verschiebbare Bodenplatte (16) über die die Kassette (2) in entnommenem Zustand blockiert ist, zur Entriegelung verschiebt, noch bevor die Spindel (9, 10) in die Kassette (2) eingreift und die Spulen (7, 8) angekuppelt werden, oder daß bei Kassetten (2) mit einer Bandschutzklappe (21), die mit dem Verriegelungshebel (18) gekoppelt ist, die Bandschutzklappe (21) durch einen auf sie greifenden, von der Kassette (2) beim Einschieben oder vom Bandantrieb oder über einen eigenen Antrieb bewegter Betätigungshebel vor dem Ankuppeln der Spulen verschwenkt wird.

8. Magazin nach einem der Ansprüche 1,3 bis 7, dadurch gekennzeichnet, daß das Magazin ein solches Stapelmagazin ist, bei dem die Kassetten übereinander flächenmäßig eingelegt sind und der Rück- oder Umspulantrieb bei vertikaler Anordnung im oberen Bereich des Magazins angeordnet ist, und daß Klinkenhebel in den Verschieberaum eingreifen und die Kassette nach dem Rück- oder Umspulvorgang durch Verschwenken bzw. Einziehen in Fallrichtung freigeben.

## Claims

1. Magazine for holding one or more cassettes, such as video, audio or data cassettes, with a take-up roller and an axially parallel take-off roller for tape-form recording carriers, where the cassettes are formed for engagement of drive spindles of a drive arrangement for the take-off and take-up rollers, characterized
- in that in the magazine a drive arrangement (M₁ , M₂) is provided for the rewind or backwind of the tape-form recording carrier from the take-off roller onto the take-up roller or vice versa,
- in that the cassette (2) engages during insertion into the magazine (5) with either one or two drive spindles (9, 10) or the latter are manually or motor driven and are slidably disposed in the inserted cassette (2), whereby the roller serving as take-off roller (7) during playback operation or both rollers are coupled to the drive arrangement (M₁,M₂),
- in that an on/off switch (2, 17) is provided, which is actuated manually or by the inserted cassette (2) indirectly during insertion into the final position and connects the drive motor (M₁,M₂) of the drive arrangement to an electricity supply,
- in that a known tape stop switch is provided which, after the backwind or rewind of the tape-form recording carrier, interrupts the electricity supply of the drive motor (M_{1,}M₂) upon reaching its end, and in that the drive spindle (9, 10) is automatically retracted out of the cassette (2) after the backwind or rewind, or that the cassette (2) is drawn away from the drive spindles.

2. Magazine according to claim 1, characterized in that it consists of a rectangular receptacle (1) in which several cassettes (2) are inserted slidably stacked in a row one after the other and are removable therefrom, in which the receptacle (1) is separated by depressable locating springs (6a, 6b) in the region of one of the two side walls (3a, 3b) of a storage chamber (5) from the remaining receptacle into which the roller (2) to be rewound or backwound is insertable and engages slidably with the drive spindle, and in that a sliding arrangement (S, 11) acting laterally in the direction of the receptacle (1) is provided in or next to the storage chamber (5) which after rewind or backwind presses laterally against the cassette (2) which depresses, with its opposite side edges the locating springs (6a, 6b) and glides from the storage chamber (5) into the receptacle (1), whereby the succeeding already present cassettes (2) are displaced by a modular dimension corresponding to the width of the cassettes (2) and in that the sliding arrangement (S, 11) is set forwards or backwards either manually by way of a lever linked in the housing and operable from outside or automatically by means of its own drive or a drive coupled with the drive arrangement, whereby the cassette (2) is only inserted into the receptacle (1) when the process of rewinding is finished and the tape stop switch has been activated.

3. Magazine according to claim 2, characterized in that there are provided projections which can be moved in and out and which engage into the interior space of the receptacle, which are coupled with the sliding arrangement, which limit the storage chamber, and which are retracted before the sliding motion of the sliding arrangement into the side walls.

4. Magazine according to claim 1 or 2, characterized in that the backwind or rewind arrangement comprises at least one drive spindle, which is rotatably mounted on a lifting arrangement, and in that after insertion of the roller the lifting arrangement is pushed manually or after closing of the switching contact of the on/off switch for the drive motor over coupling members or over a separate drive into the drive acceptance opening of the roller or the cassette, before the drive arrangement for the back-winding or rewinding is coupled to the motor.

5. Magazine according to one of the preceding claims, characterized in that for the definition of the winding direction there are arranged direction allocated function keys or a switching lever on the housing, during operation of which the on/off switch of the corresponding motor or a gear train are so controlled that the direction of tape transport follows the desired roller direction.

6. Magazine according to one of the preceding claims 2 to 5, characterized in that a control circuit (13) controls the following events in logical succession after operation of the on/off switch:
a) Switching on of the drive - if present - for the motor driven lifting arrangement for the drive spindle,
b) Control of the drive system having regard to the desired roller arrangement,
c) Switching off of the drive when the tape has reached one or the other roller, corresponding to the selectively determined roller direction,
d) Return of the lifting arrangement of the slidable drive spindle into the starting position,
e) Switching on of the sliding arrangement for pressing the cassette out of the storage chamber and return of the same into the starting position after completed lifting movement.

7. Magazine according to one of the preceding claims, characterized in that the lifting arrangement or sliding arrangement can be coupled to an unlocking arrangement (15, 18) before rewinding or backwinding, by which a locking lever possibly present in the cassette and/or a movable base plate (16) by which the cassette (2) is blocked in removed condition, even before the spindle (9, 10) engages with the cassette (2) and the rollers (7, 8) are coupled on, or that with cassettes (2) having a tape protection flap (21) which is coupled with the locking lever (18) the tape protection flap (21) is moved by means of an operating lever which grips on it and which is swung by the cassette (2) during insertion or by the tape drive or over its own drive before coupling of the rollers.

8. Magazine according to one of claims 1, 3 to 7, characterized in that the magazine is such a stacking magazine in which the cassettes are inserted one over the other insquare measure and the backwind or rewind drive in vertical arrangement is disposed in the upper region of the magazine, and in that ratchets engage in the sliding chamber and release the cassette in the direction of fall, after backwinding or rewinding, by swinging or retraction.

## Revendications

1. Magasin pour recevoir une ou plusieurs cassettes telles que des cassettes vidéo, des cassettes son ou des cassettes de données, comportant une bobine de réception et une bobine d'émission, d'axes parallèles, pour des supports d'enregistrement en forme de bandes, les cassettes étant conçues pour recevoir les broches d'entraînement d'une installation d'entraînement pour les bobines d'émission et de réception, caractérisé en ce que :
- le magasin comporte une installation d'entraînement (M₁, M₂) pour embobiner ou rembobiner le support d'enregistrement en forme de bande, de la bobine d'émission à la bobine de réception ou inversement,
- lors de sa mise en place dans le magasin (5), la cassette (2) coopère avec l'une ou les deux broches d'entraînement (9, 10) ou encore ces broches sont glissées manuellement ou par entraînement motorisé dans la cassette (2) mise en place,
- la bobine servant de bobine d'émission (7) pour le mode de lecture ou les deux bobines étant couplées sur l'installation d'entraînement (M₁, M₂),
- il est prévu un commutateur marche/arrêt (2, 17) qui est actionné manuellement ou directement par mise en place en position de fin de course de la cassette (2) et branche le moteur (M₁, M₂) de l'installation d'entraînement à l'alimentation électrique,
- il est prévu un interrupteur de bande, connu en soi, qui après rembobinage ou le transfert en arrière du support d'enregistrement en forme de bande, coupe l'alimentation électrique du moteur (M₁, M₂) avant que l'on atteigne la fin de la bande, et après rembobinage ou transfert en arrière, les broches d'entraînement (9, 10) sont extraites automatiquement de la cassette (2) ou encore la cassette (2) est dégagée des broches d'entraînement (9, 10).

2. Magasin selon la revendication 1, caractérisé en ce que qu'il se compose d'un logement (1) rectangulaire dans lequel on peut glisser plusieurs cassettes (2) en les empilant les unes derrières les autres et dont on peut les extraire, logement (1) comportant des languettes de blocage (6a, 6b) susceptibles d'être enfoncées, situées dans la zone de l'une des parois latérales (3a, 3b) d'une chambre de stockage (5) séparée du restant du logement, et dans laquelle on peut glisser la cassette (2) à bobiner ou à rembobiner, et dans laquelle peut être glissée la broche d'entraînement, et une installation de coulissement (S, 11) agissant latéralement en direction du logement (1) est prévue dans ou à côté de la chambre de stockage (5), cette installation poussant latéralement contre la cassette (2) après le bobinage ou le rembobinage, et enfonce par ses arêtes latérales opposées, les languettes de blocage (6a, 6b) et glisse de la chambre de stockage (5) dans le logement (1), les cassettes adjacentes (2), déjà présentes étant décalées d'une distance modulaire correspondant à la largeur des cassettes (2) et l'installation de translation (S, 11) est avancée ou repoussée soit manuellement par l'intermédiaire d'un levier actionné de l'extérieur et articulé sur le boîtier, soit automatiquement à l'aide d'un moyen d'entraînement propre ou couplée au dispositif d'entraînement, la cassette (2) n'étant glissée dans le logement (1) qu'après la fin de l'opération de bobinage et lorsque le commutateur de bande est actionné.

3. Magasin selon la revendication 2, caractérisé par des saillies susceptibles d'être mises en oeuvre ou d'être dégagées, et qui viennent dans le volume intérieur du logement, en étant couplées à l'installation de coulissement et délimitant la chambre de stockage, ces saillies étant escamotées dans les parois latérales avant le mouvement de poussée de l'installation de coulissement.

4. Magasin selon la revendication 1 ou 2, caractérisé en ce que l'installation de bobinage ou de rembobinage comprend au moins une broche d'entraînement montée à rotation sur l'installation de levage et en ce qu'après mise en place de la bobine, l'installation de levage est glissée manuellement ou après la fermeture du contact de commutation d'un commutateur marche/arrêt du moteur par celui-ci à l'aide d'organes de liaison ou par un moteur séparé, dans l'ouverture d'entraînement de la bobine ou de la cassette avant que l'installation d'entraînement du bobinage ou rembobinage ne soit couplée sur le moteur.

5. Magasin selon l'une des revendications précédentes, caractérisé par des touches de fonction ou un levier de commutation associés sur le boîtier à la direction pour définir le sens de l'enroulement, moyen dont l'actionnement commande le commutateur marche/arrêt du moteur ou d'une transmission de renvoi pour que le sens de défilement de la bande corresponde à la direction souhaitée pour l'enroulement.

6. Magasin selon l'une des revendications précédentes 2 à 5, caractérisé en ce qu'un circuit de commande de procédé (13) commande les étapes suivantes dans l'ordre logique après actionnement du commutateur marche/arrêt :
a) branchement de l'entraînement (dans le cas où il existe) pour l'installation de relèvement entraînée par moteur associé à la broche d'entraînement,
b) commande du système d'entraînement en respectant le sens d'enroulement souhaité,
c) coupure de l'entraînement lorsqu'on atteint la bande sur l'une ou l'autre bobine en fonction de la direction d'enroulement fixée sélectivement,
d) rappel de l'installation de levage des différentes broches d'entraînement en position de repos,
e) branchement de l'installation de coulissement pour éjecter la cassette de la chambre de stockage et la remettre en position de repos une fois le mouvement de relevage effectué.

7. Magasin selon l'une des revendications précédentes, caractérisé en ce que l'installation de relevage ou de coulissement peut être couplée à un dispositif de déverrouillage (15, 18) avant le bobinage ou le rembobinage, dispositif par lequel un levier de déverrouillage existant dans la cassette et/ou une plaque de fond (16) coulissante qui bloque la cassette (2) en position d'extraction, est déverrouillé avant que la broche (9, 10) ne pénètre dans la cassette (1) et que les bobines (7, 8) ne soient couplées ou en ce que, pour des cassettes (2) munies d'un volet de protection de bande (21), couplé au levier de verrouillage (18), le volet de protection (21) est basculé par un levier de manoeuvre agissant sur lui et qui est basculé par la cassette (2) lors de son introduction ou par l'entraînement de bande ou par un moyen d'entraînement propre avant le couplage des bobines.

8. Magasin selon l'une des revendications 1, 3 à 7, caractérisé en ce que le magasin est un magasin d'empilage pour lequel les cassettes sont placées les unes sur les autres, à plat et l'entraînement du bobinage ou rembobinage pour une disposition verticale est prévu dans la zone supérieure du magasin, le levier de verrou venant prendre dans le volume de coulissement et libère la cassette après l'opération de bobinage ou rembobinage, par basculement ou rétraction dans la direction descendante.
